# EUROPÄISCHE PATENTSCHRIFT

(11) **EP 0 812 046 B1**
(45) Veröffentlichungstag und Bekanntmachung des Hinweises auf die Patenterteilung: **16.06.1999**
(21) Anmeldenummer: 97108685.5
(22) Anmeldetag: 30.05.1997
(51) Int. Cl.: H02G 15/068, H02G 15/06, H01R 13/53

(54) **Kabelendverschluss**
Cable termination
Terminaison de câble

(30) Priorität: 04.06.1996 DE 19622311
(43) Veröffentlichungstag der Anmeldung: 10.12.1997
(73) Patentinhaber: ABB PATENT GmbH, 68309 Mannheim (DE)
(72) Erfinder: Lorenz, Dietmar, 68163 Mannheim (DE)
(74) Vertreter: Rupprecht, Klaus, Dipl.-Ing.

(56) Entgegenhaltungen:
- DE-A- 4 239 648
- DE-U- 7 139 788
- US-A- 3 445 580

## Beschreibung

Die Erfindung betrifft einen Kabelendverschluß mit einer Kabelanschlußeinheit, bei der ein Anschlußbolzen mit dem Kabelleiter einer Kabelader verbindbar ist und mit einem Kontaktkopf, in dessen Zentralbohrung das freie Ende des Anschlußbolzens zur Kontaktierung einsteckbar und gegen Herausziehen fixierbar ist, entsprechend dem Oberbegriff des Anspruchs 1.

Die für den Einbau von Kabelendverschlüssen in gekapselte SF6-Schaltanlagen verwendeten Isolatoren sind weitgehend nach IEC 859 genormt. Auch der zum Kabelendverschluß gehörige Kontaktkopf unterliegt in seinen äußeren Abmessungen im wesentlichen dieser Norm. Dagegen ist die Gestaltung der für die Kontaktierung erforderlichen inneren Anschlußelemente dem Anwender freigestellt.

Bisher sind die hier angesprochenen Kabelendverschlüsse in der Regel so aufgebaut, daß ein mit der Kabelader verbundener Anschlußbolzen in eine Konusklemme des Kontaktkopfes eingesteckt wird. Mittels einer Druckmutter, die von der dem Anschlußbolzen gegenüberliegenden Seite des Kontaktkopfes aus bewegt werden kann, wird auf die Konusklemme ein Druck augeübt. Hierdurch wird die Konusklemme zusammengepreßt und umschließt den Anschlußbolzen so fest, daß er nicht mehr aus dem Kontaktkopf herausgleiten kann. Für den Zugriff zur Druckmutter wird im Kontaktkopf eine Öffnung benötigt, die aber anschließend wieder verschlossen und abgedichtet werden muß, damit SF6-Gas nicht in den Kabelendverschluß gelangen bzw. Isolieröl nicht aus dem Kabel austreten kann.

Aufgabe der Erfindung ist es, einen Kabelendverschluß nach dem Oberbegriff des Anspruchs 1 zu schaffen, der mit weniger bzw. einfacher aufgebauten Teilen auskommt und leicht montiert werden kann.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Erfindungsgemäß kann dadurch auf die zur Betätigung der Druckmutter benötigte Öffnung in dem Kontaktkopf verzichtet werden, daß der Anschlußbolzen an seinem freien Ende mit einem sich axial erstreckenden Zapfen versehen ist, an dessen freiem Ende ein sich radial erstreckender, die Mantelfläche des Zapfens überragender Querriegel liegt. Außerdem ist in die Zentralbohrung eine Arretierscheibe eingebracht, die ein Arretierloch besitzt, dessen Form an die Außenkontur des Zapfens mit seinem Querriegel angepaßt ist. Der Querriegel kann in einer bestimmten Lage zum Arretierloch durch dieses hindurch geführt werden und sich nach einem Verdrehen der Lage des Kontaktkopfes zur Lage des Anschlußbolzens hinter der Arretierscheibe verankern.

In weiterer Ausbildung des Erfindungsgegenstandes wird auch ohne die Preßwirkung einer Konusklemme eine zuverlässige Kontaktierung dadurch erreicht, daß entlang der die Zentralbohrung bildenden Wandfläche mindestens ein, vorzugsweise mit Kontaktlamellen versehener, Kontaktring zur elektrischen Kontaktierung des Anschlußbolzens vorgesehen ist. Der mindestens eine Kontaktring kann zu seiner Fixierung in Haltenuten eingreifen, die sich in der Wandfläche der Zentralbohrung befinden.

Zweckmäßig ist es, im Eintrittsbereich der Zentralbohrung einen Gleitring vorzusehen, der das Einstecken des Anschlußbolzens erleichtert. Der Gleitring kann in einer Fixiernut ausreichenden Halt finden. In Einsteckrichtung hinter der Arretierscheibe ist ein den Querriegel aufnehmender Verriegelungsraum vorgesehen.

Von besonderer Bedeutung für den Aufbau des Kabelendverschlusses ist, daß die Zentralbohrung auf der Seite geschlossen ist, auf der eine Kontaktfläche des Kontaktkopfes liegt, die zum Kontaktieren eines Anschlusses, insbesondere dem Anschluß einer SF6-Schaltanlage, vorgesehen ist. Denn hierdurch entfallen das andernfalls benötigte Verschlußelement und zusätzliche Maßnahmen zur Abdichtung. Probleme, die bei unzureichender Abdichtung regelmäßig auftreten, werden dadurch von vornherein vermieden.

Obwohl der Anschlußbolzen selbst zapfenartig ausgebildet sein könnte, wird eine wesentliche Verbesserung des Aufbaus dadurch erzielt, daß der Anschlußbolzen an seinem freien Ende mit einer Gewindebohrung versehen ist, in die ein als Zapfen wirkender Gewindebolzen eingeschraubt ist, an dessen freiem Ende wiederum ein den Querriegel bildender Splint befestigt ist. Der als Zapfen wirkende Gewindebolzen ist mit einer Kontermutter gesichert, die außerdem dazu dient ein Fixmaß einzustellen. Dieses Fixmaß muß relativ genau eingehalten werden, damit der Querriegel an der richtigen Stelle hinter der Arretierscheibe zu liegen kommt. Andererseits kann durch diese Ausführung der Anschlußbolzen eine Toleranz von z. B. ±10 mm aufweisen, weil mittels des eingeschraubten Gewindebolzens ein Ausgleich erfolgen kann.

Für das Zusammenstecken und wieder Lösen von Kabelanschlußeinheit und Kontaktkopf ist die richtige Drehstellung dieser Teile zueinander wichtig. Im zusammengesteckten Zustand ist diese Stellung eigentlich nicht mehr erkennbar, weil Zapfen und Arretierscheibe verdeckt sind. Eine zuverlässige Orientierung wird jedoch dadurch erreicht, daß auf der vom Anschlußbolzen abgewandten Kontaktfläche eine Markierung angebracht ist, aus der sich die Stellung des Kontaktkopfes zum Anschlußbolzen ergibt.

Ausführungsbeispiele der Erfindung sind in den Zeichnungen dargestellt und werden im folgenden näher beschrieben. Es zeigen:
- Fig. 1: eine Explosionsdarstellung eines Kabelendverschlusses mit Kontaktkopf und Kabelanschlußeinheit seitlich im Schnitt,
- Fig. 2: einen aus Kontaktkopf und Kabelanschlußeinheit zusammengebauten Kabelendverschluß seitlich im Schnitt,
- Fig. 3: einen Blick auf Arretierscheibe und Querriegel entspechend der Schnittlinie nach Fig. 2 in Verriegelungsstellung,
- Fig. 4: einen Blick auf Arretierscheibe und Querriegel entspechend der Schnittlinie nach Fig. 2 in Entriegelungsstellung.

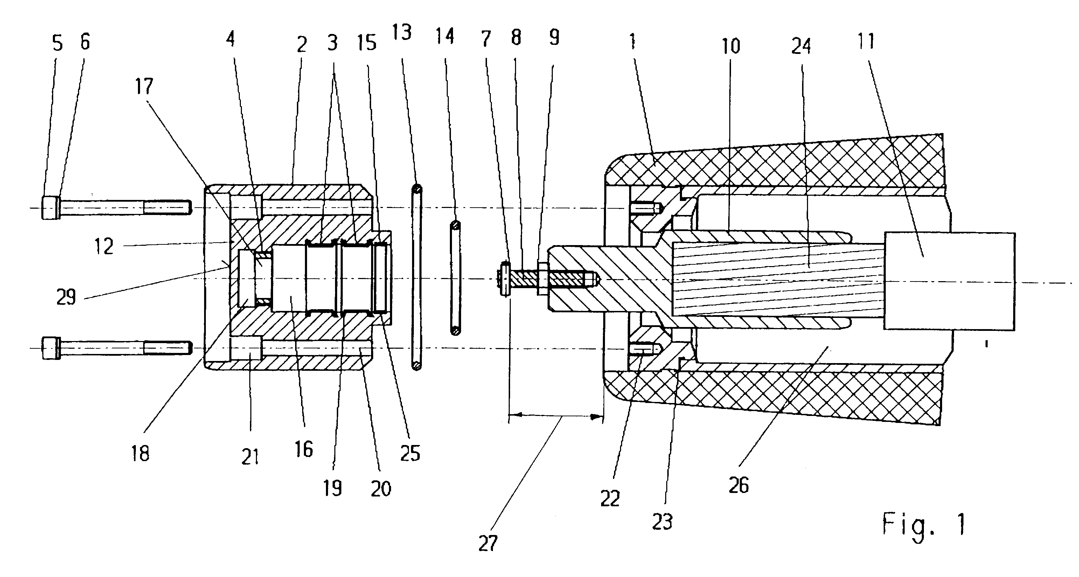

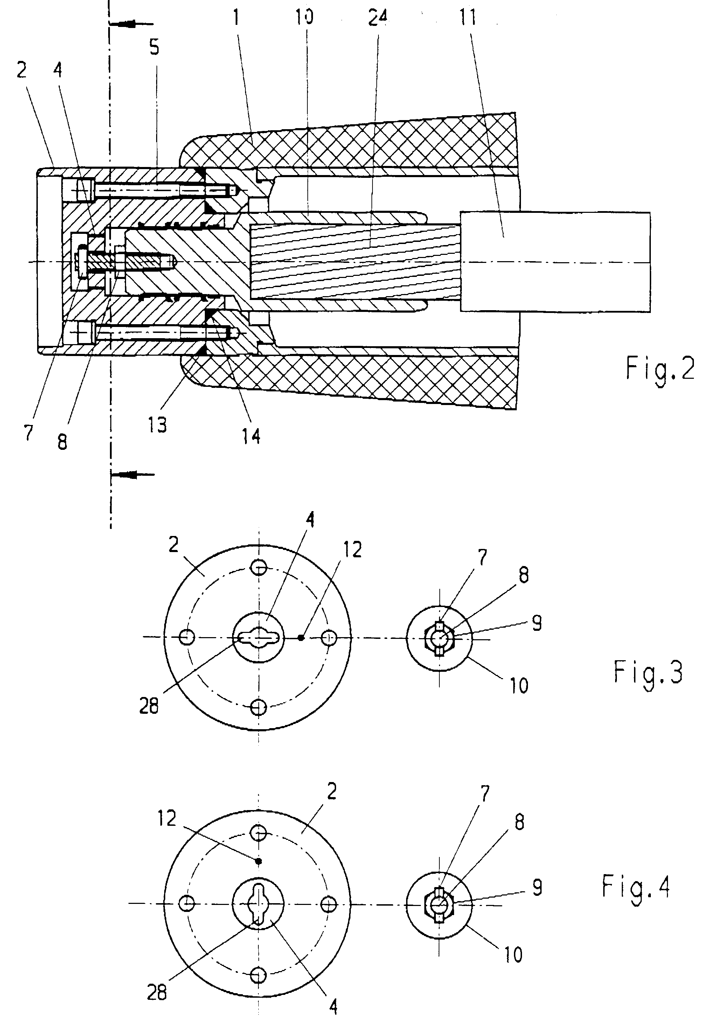

Wie Fig. 1 erkennen läßt, besitzt der Kabelendverschluß eine Kabelanschlußeinheit und einen Kontaktkopf 2 die entsprechend Fig. 2 zusammensteckbar sind. Die zur Aufnahme einer Kabelader 11 dienende Kabelanschlußeinheit ist mit einem Anschlußbolzen 10 versehen, der den Kabelleiter 24 erfaßt. Die Verbindung kann in einer üblichen Technik durch Schweißen, Löten oder Pressen erfolgen. An seinem dem Kontaktkopf 2 zugewandten freien Ende weist der Anschlußbolzen 10 ein Gewindeloch auf, in das ein Gewindebolzen 8 eingeschraubt ist. Dieser ist an seinem freien Ende mit einem als Querriegel 7 dienenden Splint ausgestattet und durch eine Kontermutter 9 auf eine Länge einstellbar, die durch ein Fixmaß 27 vorgegeben ist. Zur Kabelanschlußeinheit gehören noch eine zweiteilige Kopfbefestigung 23 und ein die Teile 10, 23 umschließender Isolator 1.

Der aus Metall gefertigte Kontaktkopf 2 besitzt eine axial verlaufende Zentralbohrung 16, die als Sacklochbohrung in Richtung zur Kabelanschlußeinheit 1,10 offen und zur SF6-Schaltanlage hin geschlossen ist. Von der offenen Seite ausgehend ist die Zentralbohrung 16 mit einer Fixiernut 25 versehen, in die ein aus Kunststoff hergestellter Gleitring 15 eingesetzt ist, der das Einstecken des Anschlußbolzens 10 mit dem Gewindebolzen 8 erleichtert.

Zur guten Kontaktierung des Anschlußbolzens 10 sind auf die Wandung der Zentralbohrung 16 zwei mit Kontaktlamellen versehene Kontaktringe 3 in geeigneten Haltenuten 19 befestigt. Kurz vor dem geschlossenen Ende der Zentralbohrung 16 ist diese zu einer Arretierscheibenöffnung 17 verengt, in die eine Arretierscheibe 4 eingesetzt ist. Die Lagefixierung der Arretierscheibe 4 innerhalb der Zentralbohrung 16 kann durch Pressen, Einschrauben oder Kleben erfolgen. In der Arretierscheibe 4 ist ein Arretierloch 28 ausgespart, dessen Kontur an die Außenkontur des Gewindebolzens 8 mit seinem Querriegel 7 angepaßt ist. Letzterer entspricht in seiner hier gewählten Ausführungsart einem Schlüssel mit Doppelbart, der in das durch das Arretierloch 28 gebildete "Schlüsselloch" passen muß, um dieses zu durchdringen. Die entsprechende Stellung des Querriegels 7 zum Arretierloch 28 ist in Fig. 4 dargestellt.

Wird der Kontaktkopf 2 um 90° gegenüber dem Querriegel 7 nach Fig. 4 gedreht, nachdem dieser beim Zusammenstecken das Arretierloch 28 durchdrungen hat, so erreicht er die in Fig. 3 ersichtliche Stellung und kann sich hinter der Arretierscheibe 4 verankern. Für eine freie Drehbeweglichkeit des Querriegels 7 sorgt ein ausreichend großer Verriegelungsraum 18. Nach der Verriegelung kann der Kontaktkopf 2 mit Schrauben 5, auf die Federringe 6 aufgeschoben sind, auf die Kabelanschlußeinheit mit ihrer Kopfbefestigung 23 und den hierin vorgesehenen Gewindelöchern 22 aufgeschraubt werden. Die mit Innensechskant versehenen Schrauben 5 finden dabei in Schraubenlöchern 20 mit zugehörigen Schraubenkopflöchern 21 Platz. Der fertig montierte Kabelendverschluß kann dann mit seiner Kontaktfläche 29 an einer SF6-Schaltanlage befestigt werden. Die hierfür benötigten Schraublöcher sind nicht dargestellt. Im Bereich der Stoßkante sind zwischen Kontaktkopf 2 und Kabelanschlußeinheit eine erste Dichtung 13 und eine zweite Dichtung 14 eingefügt.

Der Gewindebolzen 8 bietet zusammen mit der Kontermutter 9 die Möglichkeit Toleranzen der Anschlußbolzenlänge auszugleichen. Ein Fixmaß 27 sorgt für die richtige Einstecklänge des Gewindebolzens 8. Bei eingestecktem Gewindebolzen 8 kann man die Lage des Arretierlochs 28 zur Lage des Querriegels 7 nicht mehr erkennen. Eine Markierung 12 auf der Kontaktfläche 29 des Kontaktkopfes 2 erleichtert die Demontage.

### Bezugszeichenliste

Isolator (1)
Kontaktkopf (2)
Kontaktring (3)
Arretierscheibe (4)
Schraube (5)
Federring (6)
Querriegel (7)
Gewindebolzen (8)
Kontermutter (9)
Anschlußbolzen (10)
Kabelader (11)
Markierung (12)
erste Dichtung (13)
zweite Dichtung (14)
Gleitring (15)
Zentralbohrung (16)
Arretierscheibenöffnung (17)
Verriegelungsraum (18)
Haltenuten (19)
Schraubenloch (20)
Schraubenkopfloch (21)
Gewindeloch (22)
Kopfbefestigung (23)
Kabelleiter (24)
Fixiernut (25)
Isolatorhohlraum (26)
Fixmaß (27)
Arretierloch (28)
Kontaktfläche (29)

## Patentansprüche

1. Kabelendverschluß, insbesondere zur Verwendung bei SF6-Schaltanlagen, mit einer Kabelanschlußeinheit bei der ein Anschlußbolzen (10) mit dem Kabelleiter (24) einer Kabelader (11) verbindbar und die Verbindungsstelle von einem Isolator (1) umschließbar ist und mit einem Kontaktkopf (2), in dessen Zentralbohrung (16) das freie Ende des Anschlußbolzens (10) zur Kontaktierung einsteckbar und gegen Herausziehen fixierbar ist, dadurch gekennzeichnet, daß der Anschlußbolzen (10) an seinem freien Ende mit einem sich axial erstreckenden Zapfen (8) versehen ist, an dessen freiem Ende ein sich radial erstreckender, die Mantelfläche des Zapfens (8) überragender Querriegel (7) liegt und in die Zentralbohrung (16) eine Arretierscheibe (4) eingebracht ist, die ein Arretierloch (28) besitzt, dessen Form an die Außenkontur des Zapfens (8) mit seinem Querriegel (7) so angepaßt ist, daß der Querriegel (7) in einer bestimmten Lage zum Arretierloch (28) durch dieses hindurch geführt werden kann und sich nach einem Verdrehen der Lage des Kontaktkopfes (2) zur Lage des Anschlußbolzens (10) hinter der Arretierscheibe (4) verankert.

2. Kabelendverschluß nach Anspruch 1, dadurch gekennzeichnet, daß entlang der die Zentralbohrung (16) bildenden Wandfläche mindestens ein, vorzugsweise mit Kontaktlamellen versehener, Kontaktring (3) zur elektrischen Kontaktierung des Anschlußbolzens (10) vorgesehen ist.

3. Kabelendverschluß nach Anspruch 2, dadurch gekennzeichnet, daß der mindestens eine Kontaktring (3) zur Fixierung in Haltenuten (19) eingreift, die sich in der Wandfläche der Zentralbohrung (16) befinden.

4. Kabelendverschluß nach einem der vorhergehenden Ansprüche, dadurch gekennzeichnet, daß im Eintrittsbereich der Zentralbohrung (16) ein Gleitring (15) vorgesehen ist, der das Einstecken des Anschlußbolzens (10) erleichtert.

5. Kabelendverschluß nach Anspruch 4, dadurch gekennzeichnet, daß der Gleitring (15) in einer Fixiernut (25) Halt findet.

6. Kabelendverschluß nach einem der vorhergehenden Ansprüche, dadurch gekennzeichnet, daß in Einsteckrichtung hinter der Arretierscheibe (4) ein den Querriegel (7) aufnehmender Verriegelungsraum (18) vorgesehen ist.

7. Kabelendverschluß nach einem der vorhergehenden Ansprüche, dadurch gekennzeichnet, daß die Zentralbohrung (16) auf der Seite geschlossen ist, auf der eine Kontaktfläche (29) des Kontaktkopfes (2) liegt, die zum Kontaktieren eines Anschlusses, insbesondere dem einer SF6-Schaltanlage, vorgesehen ist.

8. Kabelendverschluß nach einem der vorhergehenden Ansprüche, dadurch gekennzeichnet, daß der Anschlußbolzen (10) an seinem freien Ende mit einer Gewindebohrung versehen ist, in die ein als Zapfen (8) wirkender Gewindebolzen eingeschraubt ist, an dessen freiem Ende ein den Querriegel (7) bildender Splint befestigt ist.

9. Kabelendverschluß nach Anspruch 8, dadurch gekennzeichnet, daß der als Zapfen (8) wirkende Gewindebolzen mit einer Kontermutter (9) gesichert ist, die außerdem dazu dient ein Fixmaß (27) einzustellen.

10. Kabelendverschluß nach einem der vorhergehenden Ansprüche, dadurch gekennzeichnet, daß der Kontaktkopf (2) mit Schrauben (5) auf die Kabelanschlußeinheit aufsetzbar und mit mindestens einer Dichtung (13, 14) gegenüber dieser abgedichtet ist.

11. Kabelendverschluß nach einem der vorhergehenden Ansprüche, dadurch gekennzeichnet, daß auf der vom Anschlußbolzen (10) abgewandten Kontaktfläche (29) eine Markierung (12) angebracht ist, aus der sich die Stellung des Kontaktkopfes (2) zum Anschlußbolzen (10) ergibt.

## Claims

1. Cable termination, in particular for use in SF6 switching installations, having a cable connection unit in which a connection bolt (10) can be connected to the cable conductor (24) of a cable core (11) and the connection point can be enclosed by an insulator (1), and having a contact head (2), into the central bore (16) of which the free end of the connection bolt (10) can be inserted for contact purposes and fixed so that it cannot be pulled out, characterized in that the connection bolt (10) is provided, at its free end, with an axially extending peg (8), at the free end of which there is a radially extending transverse pin (7), which projects beyond the circumferential face of the peg (8), and a locking disc (4) is introduced into the central bore (16), which locking disc has a locking hole (28), the shape of which is adapted to the outer contour of the peg (8) with its transverse pin (7) in such a way that the transverse pin (7) can be guided through the locking hole (28) in a defined position with respect to the latter and, after the position of the contact head (2) has been rotated to the position where the connection bolt (10) is behind the locking disc (4), is anchored in place.

2. Cable termination according to Claim 1, characterized in that at least one contact ring (3), which is preferably provided with contact lamellae, is provided along the wall surface forming the central bore (16) in order to make electrical contact with the connection bolt (10).

3. Cable termination according to Claim 2, characterized in that the at least one contact ring (3) engages, for fixing purposes, in retention grooves (19) which are situated in the wall surface of the central bore (16).

4. Cable termination according to one of the preceding claims, characterized in that a sliding ring (15) is provided in the entry region of the central bore (16), facilitating insertion of the connection bolt (10).

5. Cable termination according to Claim 4, characterized in that the sliding ring (15) is held in a fixing groove (25).

6. Cable termination according to one of the preceding claims, characterized in that a latching chamber (18), which accommodates the transverse pin (7), is provided behind the locking disc (4), in the insertion direction.

7. Cable termination according to one of the preceding claims, characterized in that the central bore (16) is closed on that side which a contact face (29) of the contact head (2) bears against, which contact face is provided in order to make a contact with a terminal, in particular that of an SF6 switching installation.

8. Cable termination according to one of the preceding claims, characterized in that the connection bolt (10) is provided, at its free end, with a threaded bore into which a threaded bolt, which acts as the peg (8), is screwed, to the free end of which threaded bolt a splint, forming the transverse pin (7), is attached.

9. Cable termination according to Claim 8, characterized in that the threaded bolt, which acts as the peg (8), is secured by means of a locking nut (9) which, in addition, serves to set a fixing dimension (27).

10. Cable termination according to one of the preceding claims, characterized in that the contact head (2) can be fitted onto the cable connection unit by means of screws (5) and is sealed with respect to this unit by means of at least one seal (13, 14).

11. Cable termination according to one of the preceding claims, characterized in that a marking (12), which shows the position of the contact head (2) with respect to the connection bolt (10), is arranged on the contact face (29) which is remote from the connection bolt (10).

## Revendications

1. Terminaison ou boite d'extrémité de câble, en particulier pour utilisation sur des postes à SF6, comprenant une unité de connexion de câble dans laquelle un embout de connexion (10) peut être relié à l'âme conductrice (24) d'un câble (11) et l'emplacement de liaison peut être entouré par un isolateur (1), et une tête de contact (2) dans le trou central (16) de laquelle l'extrémité libre de l'embout de connexion (10) peut être insérée en vue de l'établissement du contact et être fixée sans possibilité de retrait, **caractérisée** par le fait que l'embout de connexion (10) comporte à son extrémité libre une broche axiale (8) munie à son extrémité libre d'un verrou transversal (7) s'étendant axialement et dépassant la surface d'enveloppe de la broche (8) et que dans-le trou central (16) est rapportée une bague de verrouillage (4) qui présente un trou de verrouillage (28) dont la forme est adaptée au contour extérieur de la broche (8) pourvue de son verrou transversal (7) de telle manière que le verrou transversal (7) puisse, dans une position déterminée par rapport au trou de verrouillage (28), être engagé à travers ledit trou et se trouve, après un décalage angulaire de la position de la tête de contact (2) par rapport à la position de l'embout de connexion (10), ancré derrière la bague de verrouillage (4).

2. Terminaison ou boite d'extrémité de câble suivant la revendication 1, **caractérisée** par le fait que le long de la paroi du trou central (16), il est prévu au moins une bague de contact (3), de préférence munie de lamelles de contact, en vue de l'établissement du contact électrique de l'embout de connexion (10).

3. Terminaison ou boîte d'extrémité de câble suivant la revendication 2, **caractérisée** par le fait que la bague de contact (3), en vue de sa fixation, est engagée dans des gorges de retenue (19) ménagées dans la paroi du trou central (16).

4. Terminaison ou boite d'extrémité de câble suivant l'une des revendications précédentes, **caractérisée** par le fait qu'une bague de glissement (15) qui facilite l'insertion de l'embout de connexion (10) est prévue dans la zone d'entrée du trou central (16).

5. Terminaison ou boîte d'extrémité de câble suivant la revendication 4, **caractérisée** par le fait que la bague de glissement (15) est maintenue dans une gorge de fixation (25).

6. Terminaison ou boîte d'extrémité de câble suivant l'une des revendications précédentes, **caractérisée** par le fait qu'un espace de verrouillage (18) recevant le verrou transversal (7) est disposé dans le sens d'insertion derrière la bague de verrouillage (4).

7. Terminaison ou boîte d'extrémité de câble suivant l'une des revendications précédentes, **caractérisée** par le fait que le trou central (16) est fermé sur le côté sur lequel est située une surface de contact (29) de la tête de contact (2), prévue pour l'établissement du contact avec une connexion, en particulier celle d'un poste à SF6.

8. Terminaison ou boîte d'extrémité de câble suivant l'une des revendications précédentes, **caractérisée** par le fait que l'embout de connexion (10) présente, à son extrémité libre, un trou taraudé dans lequel peut être vissée une tige filetée faisant office de broche (8), à l'extrémité libre de laquelle est fixée une goupille constituant le verrou transversal (7).

9. Terminaison ou boîte d'extrémité de câble suivant la revendication 8, **caractérisée** par le fait que la tige filetée faisant office de broche (8) est bloquée en position à l'aide d'un contre-écrou (9) qui sert en outre à établir une cote fixe (27).

10. Terminaison ou boîte d'extrémité de câble suivant l'une des revendications précédentes, **caractérisée** par le fait que la tête de contact (2) peut être rapportée à l'aide de vis (5) sur l'unité de connexion de câble et peut être rendue étanche par rapport à cette dernière à l'aide d'au moins un joint (13, 14).

11. Terminaison ou boite d'extrémité de câble suivant l'une des revendications précédentes, **caractérisée** par le fait que la surface de contact (29) éloignée de l'embout de connexion (10) porte un repère (12) indiquant la position de la tête de contact (2) par rapport à l'embout de connexion (10).
